# EUROPÄISCHE PATENTSCHRIFT

(11) **EP 2 440 808 B1**
(45) Veröffentlichungstag und Bekanntmachung des Hinweises auf die Patenterteilung: **25.06.2014**
(21) Anmeldenummer: 10734642.1
(22) Anmeldetag: 29.05.2010
(51) Int. Cl.: B23P 15/00, F01L 1/047, F16H 53/02

(54) **VERFAHREN ZUR HERSTELLUNG EINER NOCKENWELLE**
METHOD FOR PRODUCING A CAMSHAFT
PROCÉDÉ DE FABRICATION D'UN ARBRE À CAMES

(30) Priorität: 10.06.2009 DE 102009025023
(43) Veröffentlichungstag der Anmeldung: 18.04.2012
(73) Patentinhaber: Neumayer Tekfor Holding GmbH, 77756 Hausach (DE)
(72) Erfinder: BECHTOLD, Matthias, 77716 Haslach (DE); FUCHS, Christian, 77790 Steinach (DE); TISCH, Johannes, 77855 Achern (DE)
(86) Internationale Anmeldenummer: PCT/DE2010/000603
(87) Internationale Veröffentlichungsnummer: WO 2010/142266

(56) Entgegenhaltungen:
- DE-A1- 2 336 241
- DE-A1- 3 540 979
- DE-A1- 19 703 260
- DE-A1- 19 710 847
- DE-A1-102004 055 852
- US-A1- 2004 000 213

## Beschreibung

Die Erfindung bezieht sich auf ein Verfahren zur Herstellung einer Nockenwelle gemäß dem Oberbegriff des Patentanspruchs 1.

Im Stand der Technik sind bereits unterschiedliche Varianten von Nockenwellen, deren Bestandteilen oder des Herstellungsverfahrens bekannt: siehe z.B. DE 44 20 092, DE 10 2005 061 979, DE 20 2006 018 359 U, DE 10 2007 023 087, DE 41 21 951, US 4,905,538, DE 11 2005 002 568, DE 37 17 190, DE 44 23 543, WO 01/98020, DE 10 2004 062 518, DE 196 40 872, DE 10 2007 023 323, DE 40 11 738, DE 35 40 979, DE 100 34 329, WO 2006/103012, DE 10 2004 011 815, DE 37 17 534, DE 295 19 523, DE 198 33 594, DE 199 34 405, DD 259 575, DE 197 03 821, DE 20 2006 014 691, DE 10 2005 045 290, DE 197 03 260, DE 33 42 316, DE 38 40 905, DE 38 03 687, DE 10 2006 029 415, DE 199 09 184, DE 101 01 539, WO 2004/029421, DE 196 22 372, DE 44 27 201, DE 23 36 241 A1, DE 32 09 980 A1 oder DE 37 04 092 C1.

Nockenwellen werden in unterschiedlichen Fahrzeugen und Fahrzeugtypen eingesetzt, so dass sie für die Anwendung jeweils passend ausgestaltet sein sollten. Weiterhin unterliegen auch die Nockenwellen als Bauteile eines Fahrzeugs für die Konstruktion eines Fahrzeugs unterschiedlichen Anforderungen, auf welche die Nockenwelle bzw. deren Bestandteile hin zu optimieren ist. Im Stand der Technik werden die Nockenwellen oder beispielsweise die Nocken im Allgemeinen nur in Hinsicht auf eine Eigenschaft oder eine Anforderung hin ausgestaltet bzw. optimiert. Zu nennen sind beispielsweise das Gewicht, die Vereinfachung der Herstellung oder Reibeigenschaften.

Eine gebaute Nockenwelle, die über gegossene Nocken und eine aus einem Stahlrohr erzeugte Welle verfügt, offenbart die US 2004/000213 A1.

Eine weitere gebaute Nockenwelle lässt sich der DE 197 10 847 C2 entnehmen. Dabei sind separat gefertigte Nocken auf den Aufnahmeabsätzen einer Welle aufgebracht. Für die Verbindung zwischen den Nocken und der Welle dienen axial verlaufende Zähne, die spanabhebend wirken.

Eine gattungsgemäße Nockenwelle offenbart die DE 10 2004 055 852 A1. Dabei lassen sich die Nocken axial entlang der Längsachse der Trägereinheit für das Umschalten zwischen unterschiedlichen Ventiltriebsmodi bewegen.

Dem Stand der Technik lässt sich insgesamt entnehmen, dass Nockenwellen aus mehreren Teilkomponenten hergestellt werden, wobei insbesondere die Nocken separat von der Trägereinheit gefertigt und darauf aufgebracht und befestigt werden.

Der Erfindung liegt die Aufgabe zugrunde, ein Verfahren zur Herstellung einer Nockenwelle vorzuschlagen, welches eine Adaption auf unterschiedliche Ausgestaltungsanforderungen bzw. Optimierungsanforderungen (insbesondere Herabsetzung des Reibwerts, Erhöhung der Belastbarkeit, Reduktion des Verschleißes) möglichst leicht erlaubt.

Die Aufgabe wird gelöst durch die Merkmale des Patentanspruchs 1.

Eine Ausgestaltung sieht vor, dass es sich bei dem ersten Material oder bei dem zweiten Material zumindest teilweise um Stahl, um einen härtbaren Stahl, um einen Wälzlagerstahl, vorzugsweise einen 100Cr6-Stahl, um einen Stahl mit einem vorgebbaren Kohlenstoffanteil oder um einen Guss-Stahl handelt. Eine Ausgestaltung sieht vor, dass es sich bei dem zweiten Material zumindest teilweise um einen Kunststoff handelt. Unter Kunststoff seien u.a. auch allgemein Polymere verstanden. Eine Ausgestaltung beinhaltet, dass es sich bei dem zweiten Material zumindest teilweise um eine Keramik, zumindest teilweise um ein Carbonmaterial, zumindest teilweise um ein faserverstärktes oder glasfaserverstärktes Material, zumindest teilweise um ein Glasfaser-Material oder zumindest teilweise um einen Faserverbundwerkstoff handelt.

Die weiteren Ausgestaltungen beziehen sich primär auf die geometrische Ausgestaltung der Bestandteile der Nockenwelle, welche vorzugsweise aus den zuvor genannten Materialien bestehen. Eine Ausgestaltung beinhaltet, dass die Trägereinheit im Wesentlichen als zylindrische Einheit erzeugt wird. Dabei kann ein kreisförmiger, ein prismatischer, ein winkliger Querschnitt vorgesehen sein oder eine Außenkontur mit einem beliebig gewählten Profil. Die Trägereinheit ist dabei im Wesentlichen derartig ausgestaltet, dass ihre Höhe die Abmessungen der Grund- oder Querschnittsfläche übersteigt. Das Außenprofil kann dabei auch abschnittsweise unterschiedlich ausgestaltet sein. Eine Ausgestaltung sieht vor, dass die Trägereinheit im Wesentlichen als vollständig gefüllte Einheit, als hohles Rohr oder als abschnittsweise gefülltes Rohr erzeugt wird. Eine Ausgestaltung liegt darin, dass die Trägereinheit als Einheit mit mindestens einem offenen Ende erzeugt wird. Eine Ausgestaltung beinhaltet, dass die Trägereinheit im Wesentlichen als zylindrische Einheit mit einem im Wesentlichen kreisförmigen Querschnitt erzeugt wird. Eine Ausgestaltung sieht vor, dass die Trägereinheit im Wesentlichen als eine zumindest abschnittsweise eine profilierte Außenfläche aufweisende Einheit erzeugt wird. Eine Ausgestaltung beinhaltet, dass die Trägereinheit als, insbesondere teleskopisch, längenveränderliche Einheit erzeugt wird. Eine Ausgestaltung sieht vor, dass die Trägereinheit als Einheit mit mindestens einer kanalähnlichen Struktur erzeugt wird. Eine solche Struktur dient beispielsweise dazu, eine Zufuhr von Öl zu realisieren oder eine passende Hydraulik vorzuhalten, um beispielsweise die Einstellung von einzelnen Funktionselementen in der Anwendung zu verändern. Eine Ausgestaltung beinhaltet, dass die Trägereinheit im Wesentlichen als Einheit, insbesondere als Rohr, mit mindestens einer Ausstülpung und/oder mit einer Vertiefung erzeugt wird. Die Trägereinheit verfügt somit in dieser Ausgestaltung vorzugsweise über eine solche Profilierung, dass auf den besonders ausgezeichneten Abschnitten Funktionselemente besonders vorteilhaft aufgebracht bzw. fixiert werden können.

Indem der Nocken auf der Trägereinheit in mindestens einer Richtung - insbesondere auch um eine Achse relativ zur Trägereinheit - beweglich befestigt wird, kann der Nocken beispielsweise auch ausgerichtet oder verändert werden. Indem der Nocken auf der Trägereinheit lösbar befestigt wird, wird somit eine umkehrbare Befestigung erzeugt.

Eine Ausgestaltung sieht vor, dass der Nocken auf der Trägereinheit zumindest teilweise durch Presssitz, zumindest teilweise durch eine elektromagnetische Kraft, zumindest teilweise durch Formschluss oder zumindest teilweise durch Kraftschluss befestigt wird.

Bei dem DLC-Beschichtungsmaterial handelt es sich um eine Beschichtung, welche zumindest teilweise ein diamond like carbon-Material aufweist.

Eine Ausgestaltung beinhaltet, dass die Oberfläche der Trägereinheit bis zu einer Eindringtiefe nur über mindestens einen Modifikationsbereich in Bezug auf ihre Zusammensetzung und/oder in Bezug auf mindestens eine Eigenschaft verändert wird. Eine Ausgestaltung sieht vor, dass auf den mindestens einen Modifikationsbereich der Nocken auf die Trägereinheit aufgebracht wird. Eine Ausgestaltung beinhaltet, dass auf den mindestens einen Modifikationsbereich der Nocken auf der Trägereinheit befestigt wird. Eine Ausgestaltung sieht vor, dass es sich bei dem mindestens einen

Modifikationsbereich um eine Kontaktfläche mit mindestens einem weiteren Bauteil, insbesondere um eine

Lagerbrücke oder um einen Lagerbock, handelt. Eine Ausgestaltung beinhaltet, dass die Oberfläche der Trägereinheit bis zu einer Eindringtiefe im Wesentlichen vollständig in Bezug auf ihre Zusammensetzung und in Bezug auf mindestens eine Eigenschaft verändert wird.

Weiterhin werden einzelne Verfahren zur Bearbeitung der Rohlinge vorgeschlagen, welche sich auch passend miteinander kombinieren lassen, indem sie beispielweise im Wesentlichen zeitgleich oder zeitversetzt zueinander ausgeführt werden. Eine Ausgestaltung sieht vor, dass es sich bei dem ersten Bearbeitungsverfahren oder dem zweiten Bearbeitungsverfahren um Kaltpressen, um Warmpressen oder um Halbwarmpressen handelt. Eine Ausgestaltung beinhaltet, dass es sich bei dem ersten Bearbeitungsverfahren oder dem zweiten Bearbeitungsverfahren um spanende Bearbeitung, um Fräsen, um Räumen, um Ätzen, um Sintern, um Rundkneten oder um Gießverfahren handelt.

Die Erfindung wird anhand einiger in den Figuren dargestellter Ausführungsbeispiele näher erläutert. Dabei zeigen:
Fig. 1: vier Rohlinge für die Fertigung einer Nockenwelle, teilweise in räumlicher Darstellung, teilweise in Draufsicht,
Fig. 2: eine Trägereinheit in räumlicher Darstellung und eine Nockenwelle als Draufsicht,
Fig. 3: einen Schnitt durch einen Abschnitt einer Nockenwelle mit Lagerböcken, und
Fig. 4: einen Schnitt durch eine weitere Variante einer Nocke.

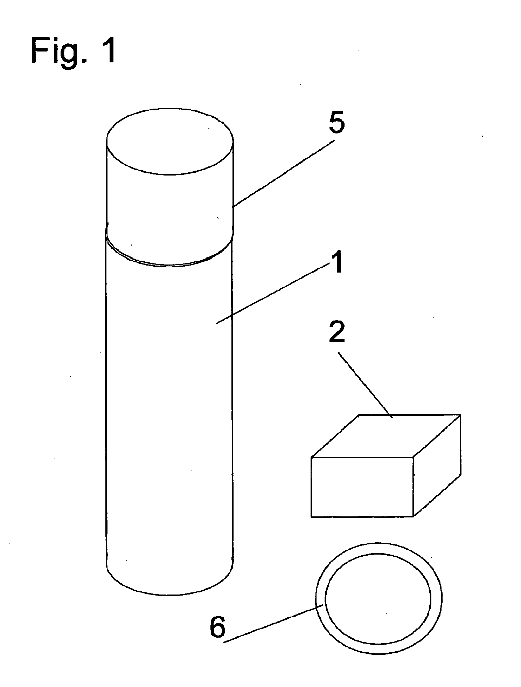

In der Fig. 1 sind ein erster Rohling 1 und ein weiterer Rohling 5 dargestellt, aus welchen eine Trägereinheit z.B. in mindestens einem Verfahrensschritt durch Kaltumformung erzeugt wird. Die beiden Rohlinge verfügen bereits über eine zylindrische Form. Zu sehen ist weiterhin der zweite Rohling 2, aus welchem beispielsweise ein Nocken mindestens durch Lochen und Warmumformung erzeugt wird. In der Draufsicht ist zusätzlich noch ein weiterer Rohling 6 dargestellt, bei welchem es sich beispielsweise um einen Lagerring handelt, welcher in den Nocken eingebracht wird, welcher aus dem zweiten Rohling 2 erzeugt wird.

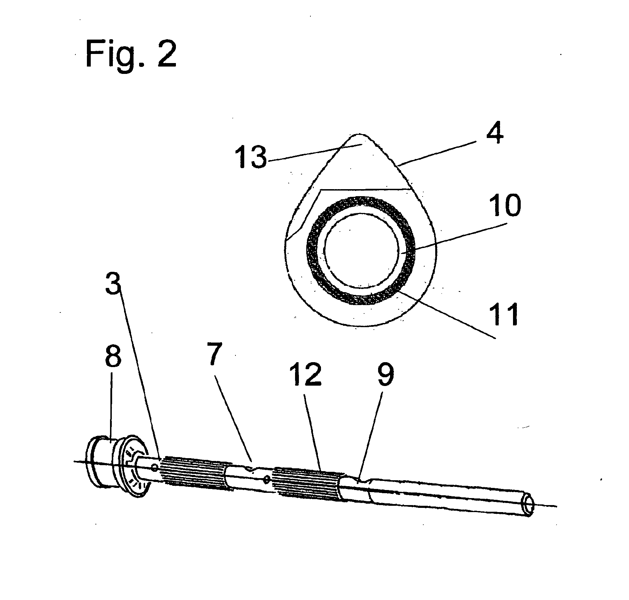

Die Fig. 2 zeigt eine Nockenwelle mit einem Nocken als Beispiel für ein Funktionselement 4. In dem Funktionselement 4 ist ein Lagerring 11 eingebracht, dessen Innenfläche die Funktionsfläche 10 ist, welche eine den Reibwert erhöhende Beschichtung trägt, damit die Verbindung des Funktionselement 4 auf der Trägereinheit 3 verbessert wird. Weiterhin bilden die Spitze und ein Teil einer Seite des Funktionselements 4 den Modifikationsabschnitt 13. In diesem Modifikationsabschnitt 13 ist die Oberfläche des Funktionselements 4 hier bis zu dem Strich als angedeutete Eindringtiefe gehärtet worden, d.h. an dieser Stelle weist das Funktionselement 4 andere Eigenschaften als im restlichen Bereich auf. Weiterhin ist die Trägereinheit 3 dargestellt. Ein offenes Ende der Trägereinheit 3 wird dabei durch ein Zahnrad 8 verschlossen, welches beispielweise über Reibschweißen mit der Trägereinheit 3 verbunden worden ist. Die Trägereinheit 3 weist Vertiefungen 7 auf, in welche weitere Funktionselemente, z.B. Geberräder eingebracht werden können. In einer solchen Vertiefung mündet beispielsweise auch eine kanalähnliche Struktur der Trägereinheit 3, in welcher z.B. Öl geführt wird. Zu erkennen ist hier auch ein Modifikationsbereich 12, in welchen hier eine Profilierung eingebracht worden ist. Daneben befindet sich ein Funktionsabschnitt 9, welcher eine Beschichtung trägt. Vorteilhafterweise werden die Beschichtungen auf die Trägereinheit 3 bzw. auf das Funktionselement 4 gezielt nur auf den dafür vorgesehenen Abschnitten aufgebracht. Bei dem Aufbringen des Funktionselements bzw. der Funktionselemente auf die Trägereinheit wird dabei entweder dafür Sorge getragen, dass ein Kontakt zwischen Funktionselement und Trägereinheit vermieden wird oder es wird gezielt ein Vorteil mindestens einer Beschichtung für die Aufbringung ausgenutzt, z.B. die Verbesserung des Gleitverhaltens. Die Beschichtungen sind dabei je nach Ausgestaltung für einen dauerhaften Verbleib auf der Nockenwelle bzw. auf deren Komponenten vorgesehen oder mindestens eine Beschichtung ist im Wesentlichen nur für die Herstellung der Nockenwelle erforderlich und vorgesehen.

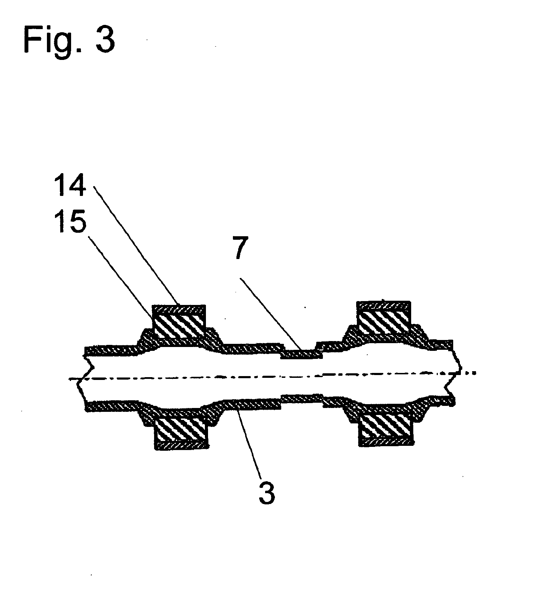

In der Fig. 3 ist schließlich ein Teil einer Nockenwelle dargestellt, deren Trägereinheit 3 hier auf zwei Lagerböcken 14 ruht. Zu erkennen sind dabei die Ausstülpungen und Vertiefungen 7 in der Trägereinheit 3. Um die Ausstülpungen sind jeweils Wälzlager 15 vorgesehen.

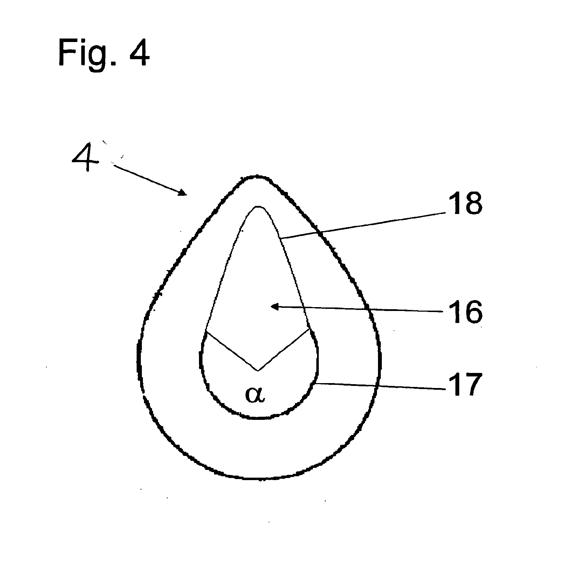

In der Fig. 4 ist ein Schnitt durch eine weitere Variante eines als Nocke ausgebildeten Funktionselements 4 dargestellt. Das Funktionselement 4 verfügt dabei über eine durchgehende Bohrung 16, welche in dieser Variante vom kreisförmigen Querschnitt wie in der Fig. 2 gezeigt, abweicht. Die Geometrie der Bohrung 16 ist dabei so gewählt, dass ein kreisförmiger Abschnitt 17 vorgesehen ist, an welchen sich ein Bereich 18 anschließt, welcher eine größere Querschnittsfläche umfasst als sie sich ergeben würde, wenn dieser Bereich ebenfalls durch einen kreisförmigen Abschnitt umfasst wäre. Der nicht-kreisförmige Bereich 18 dehnt sich insbesondere weiter aus und vermindert dadurch das Gewicht der Nocke 4, da bei gleicher Außenkontur der Nocke 4 weniger Material zwischen Außenkontur und Bohrung 16 angeordnet ist. Für den Fall, dass die Nocke 4 über Presssitz auf der Trägereinheit angeordnet ist, umschreibt der kreisförmige Abschnitt vorzugsweise einen Raumwinkel α von mindestens 180°. In dieser Ausgestaltung wird der nicht-kreisförmige Abschnitt 18 durch eine durchgehende keilförmige Vertiefung gebildet, welche unterhalb der Spitze der Nocke angeordnet ist.

## Patentansprüche

1. Verfahren zur Herstellung einer Nockenwelle,
wobei aus mindestens einem ersten Rohling, welcher aus einem ersten Material besteht, eine Trägereinheit (3) durch ein erstes Bearbeitungsverfahren erzeugt wird, wobei aus einem zweiten Rohling, welcher aus einem zweiten Material besteht, eine Nocke (4) mit einer Funktionsfläche durch ein zweites Bearbeitungsverfahren erzeugt wird, und
wobei die Nocke auf die Trägereinheit aufgebracht und auf der Trägereinheit lösbar und in Richtung einer Achse der Trägereinheit beweglich befestigt wird,
**dadurch gekennzeichnet,**
**dass** die Oberfläche der Trägereinheit (3) bis zu einer Eindringtiefe in Bezug auf ihre Zusammensetzung und in Bezug auf mindestens eine Eigenschaft durch ein Einbringen von Stickstoff oder einer Stickstoffverbindung verändert wird,
**dass** die Oberfläche der Trägereinheit geglättet wird,
und
**dass** auf die Funktionsfläche der Nocke (4) ein den Reibwert herabsetzendes DLC-Beschichtungsmaterial vor dem Aufbringen der Nocke auf die Trägereinheit aufgebracht wird.

## Claims

1. Method for the fabrication of a camshaft,
wherein a carrier unit (3) is produced by a first machining process from at least a first blank made of a first material,
wherein a functional element (4) is produced by a second machining process from a second blank made of a second material in the form of a cam, and
wherein the functional element is applied to the carrier unit and attached to the carrier unit so as to be movable in at least one direction and/or about an axis relative to the carrier unit,
**characterized in that**
the surface of the carrier unit (3) is modified up to a penetration depth in terms of its composition and/or at least one property by the introduction of nitrogen or a nitrogen compound,
the surface of the carrier unit is smoothed,
and
a friction-reducing DLC coating material is applied to the functional element (4) before the application of the functional element to the carrier unit.

## Revendications

1. Procédé pour la fabrication d'un arbre à cames,
où, à partir d'au moins une première ébauche qui est composée d'un premier matériau, une unité support (3) est réalisée par un premier procédé d'usinage,
où, à partir d'une deuxième ébauche qui est composée d'un deuxième matériau, une came (4) avec une face fonctionnelle est réalisée par un deuxième procédé d'usinage, et
où la came est placée sur l'unité support et fixée détachable sur l'unité support et mobile en direction d'un axe de l'unité support,
**caractérisé en ce,**
**que** la surface de l'unité support (3) est modifiée jusqu'à une profondeur de pénétration, en ce qui concerne sa composition et en ce qui concerne au moins une propriété, par une introduction d'azote ou d'un composé d'azote,
**que** la surface de l'unité support est lissée,
et
**qu'**un matériau de revêtement DLC diminuant le coefficient de frottement est appliqué sur la face fonctionnelle de la came (4) avant la mise en place de la came sur l'unité support.
